# EUROPÄISCHE PATENTSCHRIFT

(11) **EP 3 350 042 B1**
(45) Veröffentlichungstag und Bekanntmachung des Hinweises auf die Patenterteilung: **11.09.2019**
(21) Anmeldenummer: 16739171.3
(22) Anmeldetag: 18.07.2016
(51) Int. Cl.: B60T 13/74, B60T 11/18, B60T 7/04

(54) **ELEKTROMECHANISCHER BREMSKRAFTVERSTÄRKER UND BREMSSYSTEM**
ELECTROMECHANICAL BRAKE BOOSTER AND BRAKE SYSTEM
SERVOFREIN ÉLECTROMÉCANIQUE ET SYSTÈME DE FREINAGE

(30) Priorität: 14.09.2015 DE 102015217522
(43) Veröffentlichungstag der Anmeldung: 25.07.2018
(60) Teilanmeldung: 19185899.2
(73) Patentinhaber: Robert Bosch GmbH, 70442 Stuttgart (DE)
(72) Erfinder: PANUNZIO, Giammaria, 71634 Ludwigsburg (DE); WEISSINGER, Daniel, 70825 Korntal-Muenchingen (DE); BOLLWERK, Andre, 71711 Steinheim an der Murr (DE); NAGEL, Willi, 71686 Remseck / Hochdorf (DE)
(86) Internationale Anmeldenummer: PCT/EP2016/067006
(87) Internationale Veröffentlichungsnummer: WO 2017/045804

(56) Entgegenhaltungen:
- EP-A1- 2 292 483
- WO-A1-2011/147609
- WO-A1-2014/012702
- CN-U- 203 005 406
- DE-A1-102005 018 649
- DE-A1-102012 205 611
- DE-A1-102014 202 568
- FR-A1- 2 947 228
- US-A1- 2014 090 371

## Beschreibung

Die Erfindung betrifft einen elektromechanischen Bremskraftverstärker für ein Kraftfahrzeug. Die Erfindung betrifft überdies ein Bremssystem.

### Stand der Technik

Für die zukünftigen Antriebskonzepte von Kraftfahrzeugen werden alternative Bremsdruckaufbauvorrichtungen benötigt, da wenig, oder kein Vakuum vorliegt, um einen konventionellen Vakuumbremskraftverstärker zu betreiben. Hierzu wurden elektromotorische Bremskraftverstärker entwickelt.

Die DE 10 2012 014 361 A1 offenbart eine Betätigungseinrichtung für einen Hauptbremszylinder eines Kraftfahrzeuges, umfassend ein Gehäuse zur Anordnung zwischen dem Hauptbremszylinder und einem Bremspedal, durch das ein Druckorgan zur Betätigung eines Betätigungskolbens des Hauptbremszylinders verläuft, einen Elektromotor, eine Schnecke, die durch den Elektromotor angetrieben ist und das Druckorgan kreuzt, und ein in dem Gehäuse angeordnetes Getriebe, das die Schnecke mit dem Betätigungskolben derart koppelt, um eine Drehbewegung der Schnecke in eine Translationsbewegung des Betätigungskolbens zu übersetzen.

In der FR 2 947 228 A1 ist ein elektromechanischer Bremskraftverstärker beschrieben, welcher ein erstes Tragelement und ein zweites Tragelement aufweist, wobei die Tragelemente an einem Gehäuse des elektromechanischen Bremskraftverstärkers befestigt sind und sich parallel zu einer Verstellrichtung einer Spindel des elektromechanischen Bremskraftverstärkers durch diesen erstrecken. An der Spindel ist eine Lagervorrichtung angeordnet, mittels welcher die Spindel entlang der Tragelemente führbar ist. Auch der in der CN 203 005 406 U beschriebene elektromechanische Bremskraftverstärker weist zwei derartige Tragelemente und eine Führung seiner Spindel entlang der Tragelemente mittels einer Lagervorrichtung auf.

Während eines Betriebes der mit den zwei Tragelementen ausgebildeten elektromechanischen Bremskraftverstärker tritt aufgrund von Querkräften und Drehmomenteinflüssen häufig ein Kippmoment zwischen einer Eingangsstange, der jeweiligen Spindel und einem Verstärkerkolben des jeweiligen elektromechanischen Bremskraftverstärkers auf.

Der Erfindung liegt somit die Aufgabe zugrunde, einen verbesserten elektromechanischen Bremskraftverstärker bereitzustellen, welcher eine optimierte Lagerung der Spindel des elektromechanischen Bremskraftverstärkers ermöglicht, die in der Lage ist, auftretende Querkräfte und Drehmomenteinflüsse zu kompensieren.

Die Aufgabe wird mit einem elektromechanischen Bremskraftverstärker für ein Kraftfahrzeug mit den Merkmalen des Patentanspruchs 1 gelöst. Des Weiteren wird die Aufgabe mit einem Bremssystem mit den Merkmalen des Patentanspruchs 9 gelöst.

### Offenbarung der Erfindung

Die vorliegende Erfindung schafft einen elektromechanischen Bremskraftverstärker für ein Kraftfahrzeug mit den Merkmalen des Patentanspruchs 1.

Die vorliegende Erfindung schafft des Weiteren das Bremssystem Merkmalen des Patentanspruchs 9.

Da das erste Gleitlager die Spindel entlang dem ersten Tragelement führt, während das zweite Gleitlager in Querrichtung zu der Längsachse des zweiten Tragelements an dem zweiten Tragelement schwimmend gelagert ist, ist die Spindel in vorteilhafter Weise entlang dem ersten Tragelement und dem zweiten Tragelement mittels der Lagervorrichtung in Axialrichtung verschiebbar, ohne dass es zu einem Klemmen des ersten und/oder zweiten Gleitlagers kommen kann.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist vorgesehen, dass die Lagervorrichtung einen Mittenabschnitt, einen ersten Endabschnitt und einen zweiten Endabschnitt aufweist, wobei die Lagervorrichtung derart gekröpft ausgebildet ist, dass der Mittenabschnitt im montierten Zustand der Lagervorrichtung in einer, zu einer Verstellachse der Spindel senkrechten ersten Ebene angeordnet ist, und wobei der erste Endabschnitt und der zweite Endabschnitt der Lagervorrichtung zumindest teilweise in einer, zu der Verstellachse der Spindel senkrechten, von der ersten Ebene beabstandeten zweiten Ebene angeordnet sind. Durch die gekröpfte Ausbildung der Lagervorrichtung kann somit in vorteilhafter Weise zusätzlicher Bauraum zwischen der Lagervorrichtung und einem benachbart zu der Lagervorrichtung angeordneten Ventilkörper bereitgestellt werden.

Gemäß einer weiteren bevorzugten Weiterbildung ist vorgesehen, dass die Spindel in einem Betriebszustand des elektromechanischen Bremskraftverstärkers einen Kippwinkel gegenüber dem ersten Tragelement und/oder dem zweiten Tragelement aufweist, wobei das erste Gleitlager und das zweite Gleitlager dazu ausgebildet sind, sich dem Kippwinkel anzupassen. Somit kann der durch Anliegen von Querkräften und/oder Drehmomenteinflüssen an der Spindel erzeugte Kippwinkel durch die Lagervorrichtung effektiv kompensiert werden.

Gemäß einer weiteren bevorzugten Weiterbildung ist vorgesehen, dass eine Spindelmutter der Spindel an einem Außenumfang ein Vielzahnprofil aufweist und in einer Vielzahnnabe eines Zahnrads des Getriebes entlang der Verstellachse der Spindel verschiebbar gelagert ist. Somit kann die Spindelmutter samt Spindel bei einem Ausfall des elektromechanischen Bremskraftverstärkers ohne gegen einen Widerstand des Elektromotors bzw. des Getriebes zu arbeiten, in Verstellrichtung der Spindel verschoben werden.

Gemäß einer weiteren bevorzugten Weiterbildung ist vorgesehen, dass das erste Gleitlager in die erste Öffnung der Lagervorrichtung mittels einer an einem Außenumfang des ersten Gleitlagers umlaufend ausgebildeten Nut eingesetzt ist, wobei zwischen der Lagervorrichtung und der Nut ein Spalt ausgebildet ist, und wobei das erste Gleitlager in der Nut relativ zu der Lagervorrichtung um eine parallel zu dem ersten Endabschnitt und dem zweiten Endabschnitt angeordneten Achse dreh- und kippbar gelagert ist. Bei einer durch beispielsweise Toleranzen bedingten Verkippung der Spindel und der mit der Spindel fest verbundenen Lagervorrichtung ist das Gleitlager somit in der Lage, durch ein Verkippen in der Nut relativ zu der Lagervorrichtung das Verkippen der Spindel auszugleichen, so dass die Spindel durch die Lagervorrichtung ohne zu verklemmen entlang dem ersten und zweiten Tragelement führbar ist.

Gemäß einer weiteren bevorzugten Weiterbildung ist vorgesehen, dass eine Stirnseite der Spindelmutter ein gemeinsamer Anschlag der Lagervorrichtung und von Fingerelementen ist, welche eine Eingangsstange, einen durch die Eingangsstange betätigbaren, in der als Hohlspindel ausgebildeten Spindel angeordneten Plunger und eine an dem Plunger angeordnete Befestigungsplatte miteinander verbinden. Somit kann in vorteilhafter Weise ein gemeinsamer Anschlag der Lagervorrichtung und der Fingerelemente an der Stirnseite der Spindelmutter bereitgestellt werden. Die Lagervorrichtung und die Fingerelemente können sich somit mit sehr hohen Kräften an dem Anschlag abstützen.

Gemäß einer weiteren bevorzugten Weiterbildung ist vorgesehen, dass die Fingerelemente durch in der Lagervorrichtung ausgebildete Löcher greifen und zusammen mit der Befestigungsplatte gegen ein Verdrehen gesichert sind. Somit können die Fingerelemente und die Befestigungsplatte in vorteilhafter Weise ausgerichtet werden und sind auch bei Einwirkung von in Radialrichtung gerichteten Kräften gegen ein Verdrehen gesichert.

Gemäß einer weiteren bevorzugten Weiterbildung ist vorgesehen, dass das erste Gleitlager und das zweite Gleitlager aus Kunststoff, insbesondere Polyoxymethylen oder Polyamid, ausgebildet und für eine Reibpaarung Kunststoff/Stahl geeignet sind. Somit kann eine reibungs- und verschleißarme Lagerung bzw. Führung der Gleitlager entlang den Tragelementen gewährleistet werden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine Längsschnittansicht eines elektromechanischen Bremskraftverstärkers für ein Kraftfahrzeug gemäß einer bevorzugten Ausführungsform der Erfindung;
- Fig. 2: eine perspektivische Darstellung einer Lagervorrichtung des elektromechanischen Bremskraftverstärkers für das Kraftfahrzeug gemäß der bevorzugten Ausführungsform der Erfindung;
- Fig. 3: eine Querschnittsdarstellung eines Gleitlagers der Lagervorrichtung des elektromechanischen Bremskraftverstärkers für das Kraftfahrzeug gemäß der bevorzugten Ausführungsform der Erfindung;
- Fig. 4: eine perspektivische Darstellung des Getriebes und der Spindel des elektromechanischen Bremskraftverstärkers für das Kraftfahrzeug gemäß der bevorzugten Ausführungsform der Erfindung;
- Fig. 5: eine Längsschnittansicht des elektromechanischen Bremskraftverstärkers für das Kraftfahrzeug gemäß der bevorzugten Ausführungsform der Erfindung;
- Fig. 6: eine Längsschnittansicht des elektromechanischen Bremskraftverstärkers für das Kraftfahrzeug gemäß der bevorzugten Ausführungsform der Erfindung; und
- Fig. 7: eine vergrößerte Detailansicht der in Fig. 1 gezeigten Längsschnittansicht des elektromechanischen Bremskraftverstärkers für das Kraftfahrzeug gemäß der bevorzugten Ausführungsform der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

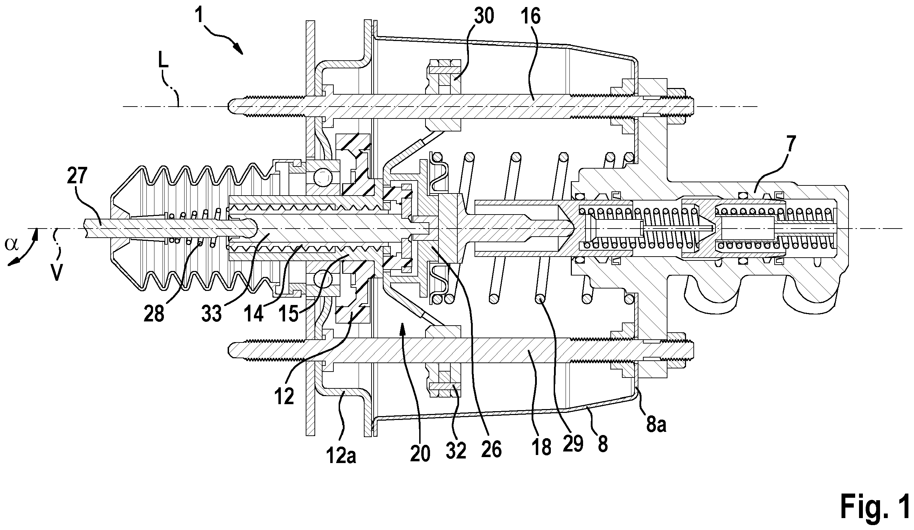

Fig. 1 zeigt eine Längsschnittansicht eines elektromechanischen Bremskraftverstärkers 1 für ein Kraftfahrzeug gemäß einer bevorzugten Ausführungsform der Erfindung.

Der elektromechanische Bremskraftverstärker 1 weist einen (in Fig. 1 nicht gezeigten) Elektromotor auf, welcher über ein Getriebe 12 mit einer Spindel 14 derart wirkverbunden ist, dass eine Rotation eines Läufers des Elektromotors eine Translationsbewegung der Spindel bewirkt. An einem Getriebegehäuseboden 12a des Getriebes 12 ist ein erstes Tragelement 16 und ein zweites Tragelement 18 befestigt. Das erste Tragelement 16 und das zweite Tragelement 18 erstecken sich entlang ihrer jeweiligen Längsachsen L.

An der Spindel 14 ist eine Lagervorrichtung 20 angeordnet, welche die Spindel 14 an dem ersten Tragelement 16 und dem zweiten Tragelement 18 so lagert, dass die in die Translationsbewegung versetzte Spindel 14 mittels der Lagervorrichtung 20 beabstandet von dem ersten Tragelement entlang dem zumindest einen Tragelement führbar ist.

Das erste Tragelement 16 und das zweite Tragelement 18 sind vorzugsweise durch einen Zuganker ausgebildet. Alternativ können das erste Tragelement 16 und das zweite Tragelement 18 beispielsweise durch ein Rohr mit innenliegender Durchgangsschraube ausgebildet sein. Der Zuganker oder alternativ das Rohr mit innenliegender Durchgangsschraube sind vorzugsweise aus Stahl ausgebildet. Ein Gehäuse 8 des elektromechanischen Bremskraftverstärkers 1 ist vorzugsweise aus Stahlblech ausgebildet. Eine Eingangsstange 27 ist vorzugsweise dazu ausgebildet, einen Plunger 33 zu betätigen. Der Plunger 33 ist vorzugsweise in der als Hohlspindel ausgebildeten Spindel 14 verschiebbar angeordnet.

Die Lagervorrichtung 20 ist vorzugsweise mit der Spindel 14 verschweißt. Alternativ kann die Lagervorrichtung 20 beispielsweise mit der Spindel 14 einteilig ausgebildet oder in anderer Art und Weise verbunden sein. Auf einer der Spindel 14 gegenüberliegenden Seite der Lagervorrichtung 20 ist die Lagervorrichtung 20 vorzugsweise mit einem Ventilkörper 26 verbunden oder ausgebildet.

Zwischen dem Ventilkörper 26 und einem an einem Endabschnitt des Gehäuses 8 angeordneten Hauptbremszylinder 7 ist eine Rückstellfeder 29 angeordnet. Die Rückstellfeder 29 ist vorzugsweise dazu ausgebildet, eine Rückstellkraft auf die Spindel 14 auszuüben.

Die Lagervorrichtung 20 ist vorzugsweise dazu ausgebildet, ein bei einem Betrieb des elektromechanischen Bremskraftverstärkers 1 durch ein Anliegen von Querkräften auf die Spindel auftretendes Kippmoment zwischen Eingangsstange, Spindel und Verstärkerkolben zu kompensieren. Ein Kippwinkel α zwischen der Verstellachse V der Spindel 14 und der Längsachse L des ersten Tragelements 16 und des zweiten Tragelements 18 ist mittels der Lagervorrichtung 20 somit in vorteilhafter Weise kompensierbar.

Die Lagervorrichtung 20 weist vorzugsweise an jeweiligen Endabschnitten Öffnungen auf, in welche Gleitlager eingesetzt sind. An einem ersten Endabschnitt der Lagervorrichtung 20 ist ein erstes Gleitlager 30 eingesetzt. An einem zweiten Endabschnitt der Lagervorrichtung 20 ist vorzugsweise ein zweites Gleitlager 32 eingesetzt. Durch das erste Gleitlager 30 und das zweite Gleitlager 32 ist die Spindel 14 somit an dem ersten Tragelement 16 und dem zweiten Tragelement 18 gelagert. Das erste Gleitlager 30 führt die Spindel 14 vorzugsweise entlang dem ersten Tragelement 16. Das zweite Gleitlager 32 ist vorzugsweise in Querrichtung zu der Längsachse L des zweiten Tragelements 18 an dem zweiten Tragelement 18 schwimmend gelagert.

Das erste Tragelement 16 und/oder das zweite Tragelement 18 weisen beispielsweise bei Anliegen von Querkräften gegenüber der Verstellachse V der Spindel 14 einen Kippwinkel α auf. Das erste Gleitlager 30 und das zweite Gleitlager 32 sind in vorteilhafter Weise dazu ausgebildet, sich dem Kippwinkel α anzupassen und diesen dadurch zu kompensieren.

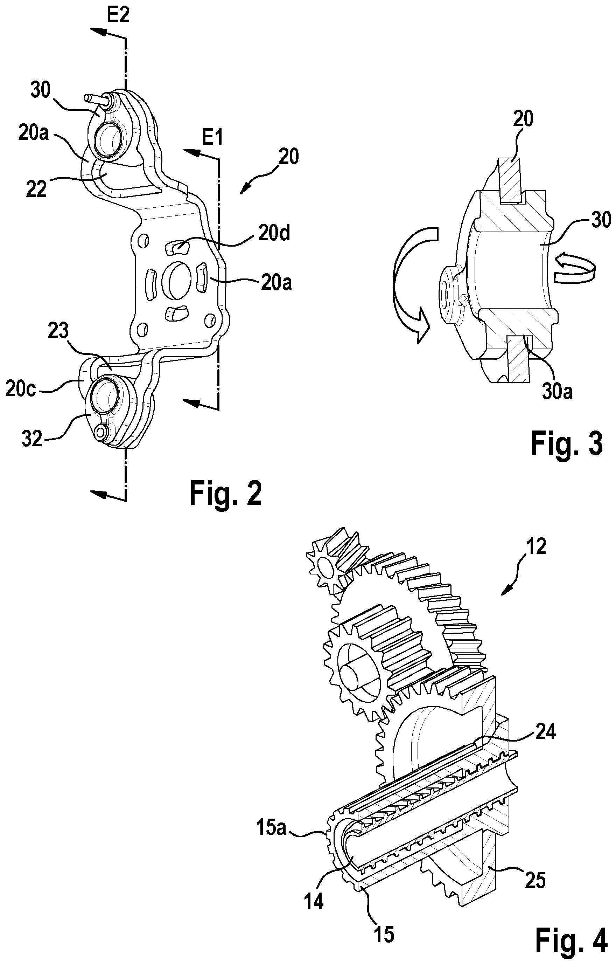

Fig. 2 zeigt eine perspektivische Darstellung einer Lagervorrichtung 20 des elektromechanischen Bremskraftverstärkers 1 für das Kraftfahrzeug gemäß der bevorzugten Ausführungsform der Erfindung.

Die Lagervorrichtung 20 weist vorzugsweise eine erste Öffnung bzw. Langloch 22 und eine zweite Öffnung bzw. Langloch 23 auf. In die erste Öffnung 22 ist vorzugsweise ein erstes Gleitlager 30 eingesetzt, welches das (in Fig. 2 nicht gezeigte) erste Tragelement 16 umgreift. In die zweite Öffnung 23 ist vorzugsweise ein zweites Gleitlager 32 eingesetzt, welches das (in Fig. 2 nicht gezeigte) zweite Tragelement 18 umgreift. Die (in Fig. 2 nicht gezeigte) Spindel ist somit in vorteilhafter Weise mittels der Lagervorrichtung 20 entlang dem ersten Tragelement und dem zweiten Tragelement verschiebbar gelagert.

Die Lagervorrichtung 20 weist vorzugsweise einen Mittenabschnitt 20a, einen ersten Endabschnitt 20b und einen zweiten Endabschnitt 20c auf. Die Lagervorrichtung 20 ist vorzugsweise derart gekröpft ausgebildet, dass der Mittenabschnitt 20a im montierten Zustand der Lagervorrichtung 20 in einer, zu der (in Fig. 2 nicht gezeigten) Verstellachse der Spindel senkrechten ersten Ebene E1 angeordnet ist. Der erste Endabschnitt 20b und der zweite Endabschnitt 20c der Lagervorrichtung 20 sind teilweise in einer, zu der (in Fig. 2 nicht gezeigten) Verstellachse der Spindel senkrechten zweiten Ebene E2 angeordnet.

Das erste Gleitlager 30 und das zweite Gleitlager 32 sind vorzugsweise aus Kunststoff, insbesondere Polyoxymethylen, ausgebildet. Alternativ können das erste Gleitlager 30 und das zweite Gleitlager 32 aus einem anderen geeigneten Kunststoff, beispielsweise Polyamid, ausgebildet sein. Des Weiteren sind das erste Gleitlager 30 und das zweite Gleitlager 32 für eine Reibpaarung Kunststoff/Stahl geeignet.

Das erste Gleitlager 30 und das zweite Gleitlager 32 weisen vorzugsweise eine Rundbohrung zur Aufnahme des jeweiligen ersten Tragelements 16 und des zweiten Tragelements 18 auf, um eine optimale Flächenpressung zu gewährleisten. Die Lagervorrichtung 20 ist wie vorstehend beschrieben gekröpft ausgebildet, um einen Abstand zwischen den Gleitlagern 30, 32 und der Spindelmutter 15 zu vergrößern. Ein größerer Abstand führt bei gleichem Toleranzwert vorzugsweise zu einem geringeren Kippwinkel der Spindel 14 gegenüber der Spindelmutter 15.

Fig. 3 zeigt eine Querschnittsdarstellung eines Gleitlagers 30 der Lagervorrichtung 20 des elektromechanischen Bremskraftverstärkers 1 für das Kraftfahrzeug gemäß der bevorzugten Ausführungsform der Erfindung. Das Gleitlager 30 ist in vorteilhafter Weise in die Öffnung 22 der Lagervorrichtung 20 mittels einer an einem Außenumfang des ersten Gleitlagers 30 umlaufend ausgebildeten Nut 30a eingesetzt.

Zwischen Lagervorrichtung 20 und Nut 30a ist vorzugsweise ein Spalt ausgebildet, so dass das Gleitlager 30 in der Nut 30a relativ zu der Lagervorrichtung 20 um die zweite Ebene E2 dreh- und kippbar gelagert ist.

Bei einer durch beispielsweise Toleranzen bedingten Verkippung der (in Fig. 1 gezeigten) Spindel 14 und der mit der Spindel fest verbundenen Lagervorrichtung 20 ist das Gleitlager 30 somit in der Lage, durch ein Verkippen in der Nut 30a relativ zu der Lagervorrichtung 20 das Verkippen der Spindel 14 auszugleichen, so dass die Spindel 14 durch die Lagervorrichtung 20 ohne zu verklemmen entlang dem ersten und zweiten Tragelement 16, 18 führbar ist.

Fig. 4 zeigt eine perspektivische Darstellung des Getriebes 12 und der Spindel 14 des elektromechanischen Bremskraftverstärkers 1 für das Kraftfahrzeug gemäß der bevorzugten Ausführungsform der Erfindung. Die Spindelmutter 15 der Spindel 14 weist vorzugsweise an einem Außenumfang 15a ein Vielzahnprofil auf. Die Spindelmutter 15 der Spindel 14 ist des Weiteren vorzugsweise in einer Vielzahnnabe 24 eines Zahnrads 25 des Getriebes 12 in Verstellrichtung der Spindel 14 verschiebbar gelagert. Somit ist die Spindelmutter 15 der Spindel 14 im Falle eines Ausfalls des elektromechanischen Bremskraftverstärkers 1 kraftlos entlang ihrer Verstellachse verschiebbar.

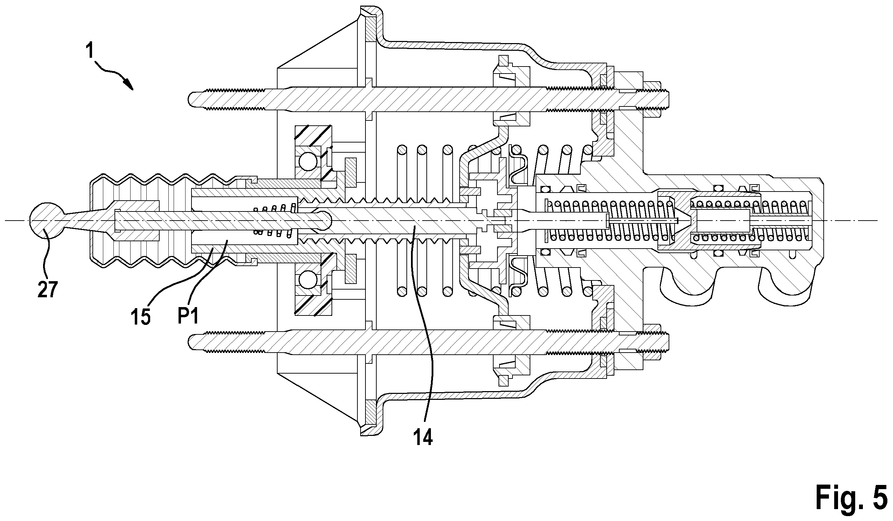

Fig. 5 zeigt eine Längsschnittansicht des elektromechanischen Bremskraftverstärkers für das Kraftfahrzeug gemäß der bevorzugten Ausführungsform der Erfindung. Die Spindelmutter 15 ist in der vorliegenden Darstellung in einem Normalbetrieb des elektromechanischen Bremskraftverstärkers 1 gezeigt. Die Spindel 14 weist in der vorliegenden Darstellung ihren maximalen Hub auf.

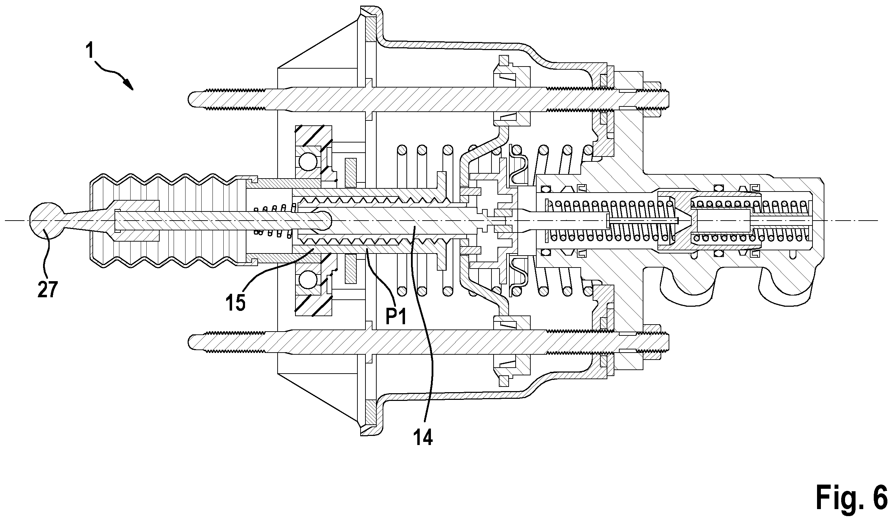

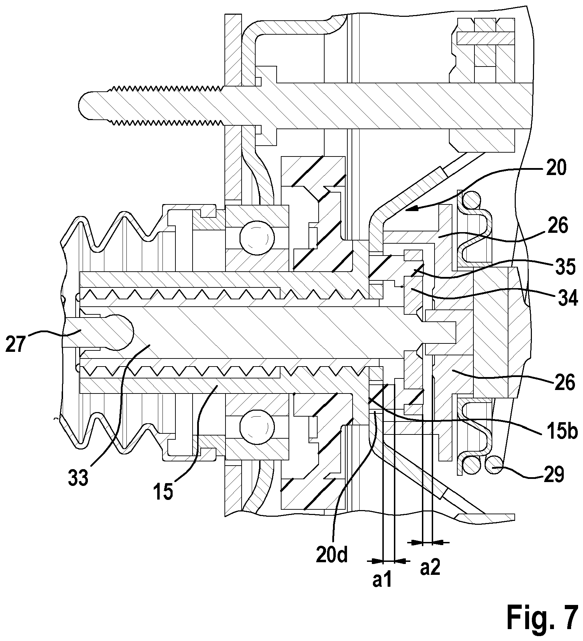

Fig. 6 zeigt eine Längsschnittansicht des elektromechanischen Bremskraftverstärkers 1 für das Kraftfahrzeug gemäß der bevorzugten Ausführungsform der Erfindung. Der elektromechanische Bremskraftverstärker 1 ist in der vorliegenden Darstellung in einem Push-Through-Modus gezeigt, in welchem eine elektromechanische Unterstützung einer vom Fahrer erzeugten Bremskraft aufgrund eines Ausfalls des elektromechanischen Bremskraftverstärkers 1 nicht gegeben ist. Der Fahrer betätigt im Push-Through-Modus also den Hauptbremszylinder allein durch eine manuell erzeugte Bremskraft. Im Push-Through-Modus wird die Spindelmutter 15 gemäß der vorliegenden Ausführungsform mitsamt der Spindel 14 durch Betätigung der Eingangsstange 27 axial in Verstellrichtung der Spindel 14 verschoben. Fig. 7 zeigt eine vergrößerte Detailansicht der in Fig. 1 gezeigten Längsschnittansicht des elektromechanischen Bremskraftverstärkers 1 für das Kraftfahrzeug gemäß der bevorzugten Ausführungsform der Erfindung.

Eine Stirnseite 15b der Spindelmutter 15 ist vorzugsweise ein gemeinsamer Anschlag der Lagervorrichtung 20 und von Fingerelementen 35, welche die Eingangsstange 27, einen durch die Eingangsstange 27 betätigbaren, in der Hohlspindel 14 angeordneten Plunger 33 und eine an dem Plunger 33 angeordnete Befestigungsplatte 34 miteinander verbinden. Die Fingerelemente 35 greifen des Weiteren vorzugsweise durch in der Lagervorrichtung 20 ausgebildete Löcher 20d und sind zusammen mit der Befestigungsplatte 34 gegen ein Verdrehen gesichert. Der Ventilkörper 26 wiederum ist mit der Lagervorrichtung 20 dreh- und axialfest verbunden. Im vorliegenden Ausführungsbeispiel weisen die Fingerelemente 35 Klipps bzw. Klammern auf, welche durch die in der Lagervorrichtung 20 ausgebildeten Öffnungen 20d durchsteckbar sind. Die (in Fig. 7 nicht gezeigte) Rückstellfeder wirkt auf die Lagervorrichtung 20 und drückt diese gegen den Anschlag an der Stirnseite 15b der Spindelmutter 15. Das (in Fig. 7 nicht gezeigte) Federelement 28, das im Bereich der Eingangsstange 27 angeordnet ist, drückt die Fingerelemente 35 von der anderen Seite gegen den Anschlag an der Stirnseite 15b der Spindelmutter 15.

Die Lagervorrichtung 20, der Ventilkörper 26 und die Spindel 14 sind vorzugsweise miteinander verbunden und bilden eine Baueinheit. Der Plunger 33, die Befestigungsplatte 34 und die Fingerelemente 35 sind vorzugsweise ebenfalls miteinander verbunden und bilden eine weitere Baueinheit.

Die weitere Baueinheit bestehend aus dem Plunger 33, der Befestigungsplatte 34 und den Fingerelementen 35 ist in der als Hohlspindel ausgebildeten Spindel 14 axial verschiebbar. Die weitere Baueinheit ist vorzugsweise von einer in Fig. 7 dargestellten Ausgangsstellung entgegen einer Betätigungsrichtung der Spindel 14 in einem Bereich eines Spaltes a1 verschiebbar. Darüber hinaus ist die weitere Baueinheit von einer in Fig. 7 dargestellten Ausgangsstellung in Betätigungsrichtung der Spindel 14 in einem Bereich eines Spaltes a2 verschiebbar.

In der in Fig. 7 dargestellten Ausgangsstellung der weiteren Baueinheit, ohne Pedalkraft des Fahrers, sind die Spalte a1 und a2 gleich groß und die Befestigungsplatte 34 steht mittig. Die Befestigungsplatte 34, die Fingerelemente 35 und die Lagervorrichtung 20 weisen als gemeinsamen Anschlag die Stirnseite 15b der Spindelmutter 15 auf, an welchem diese jeweils ausrichtbar sind.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise kann die Lagervorrichtung auch eine andere geeignete Form aufweisen bzw. aus einem anderen geeigneten Material ausgebildet sein. Des Weiteren können die Gleitlager beispielsweise in anderer Weise an der Lagervorrichtung befestigbar sein.

### Bezugszeichenliste

- 1: Bremskraftverstärker
- 7: Bremszylinder
- 8: Gehäuse
- 12: Getriebe
- 12a: Getriebegehäuseboden
- 14: Spindel
- 15: Spindelmutter
- 15a: Außenumfang der Spindelmutter
- 15b: Stirnseite der Spindelmutter
- 16: erstes Tragelement
- 18: zweites Tragelement
- 20: Lagervorrichtung
- 20a: Mittenabschnitt
- 20b: erster Endabschnitt
- 20c: zweiter Endabschnitt
- 20d: Löcher
- 22: Öffnung
- 23: Öffnung
- 24: Vielzahnnabe
- 25: Zahnrad
- 26: Ventilkörper
- 27: Eingangsstange
- 28: Federelement
- 29: Rückstellfeder
- 30: erstes Gleitlager
- 32: zweites Gleitlager
- 33: Plunger
- 34: Befestigungsplatte
- 35: Fingerelemente
- 40: weitere Lagervorrichtung
- α: Kippwinkel
- a1, a2: Abstand
- L: Längsachse
- V: Verstellachse
- E1: erste Ebene
- E2: zweite Ebene

## Patentansprüche

1. Elektromechanischer Bremskraftverstärker (1) für ein Kraftfahrzeug, mit:
einem Elektromotor, welcher über ein Getriebe (12) mit einer Spindel (14) derart wirkverbunden ist, dass eine Rotation eines Läufers des Elektromotors eine Translationsbewegung der Spindel (14) bewirkt,
wobei an einem Getriebegehäuseboden (12a) des Getriebes (12) ein erstes Tragelement (16) und ein zweites Tragelement (18) befestigt sind, welche sich entlang ihrer jeweiligen Längsachse (L) erstrecken,
wobei an der Spindel (14) eine Lagervorrichtung (20) angeordnet ist, welche die Spindel (14) an dem ersten Tragelement (16) und an dem zweiten Tragelement (18) so lagert, dass die in die Translationsbewegung versetzte Spindel (14) mittels der Lagervorrichtung (20) beabstandet von dem ersten Tragelement (16) und dem zweiten Tragelement (18) entlang dem ersten Tragelement (16) und dem zweiten Tragelement (18) verschiebbar gelagert ist,
und wobei die Lagervorrichtung (20) eine erste Öffnung (22) aufweist, in welche ein das erste Tragelement (16) umgreifendes erstes Gleitlager (30) eingesetzt ist, und die Lagervorrichtung (20) eine zweite Öffnung (23) aufweist, in welche ein das zweite Tragelement (18) umgreifendes zweites Gleitlager (32) eingesetzt ist,
**dadurch gekennzeichnet, dass**
das erste Gleitlager (30) die Spindel (14) entlang dem ersten Tragelement (16) führt, während das zweite Gleitlager (32) in Querrichtung zu der Längsachse (L) des zweiten Tragelements (18) an dem zweiten Tragelement (18) schwimmend gelagert ist.

2. Elektromechanischer Bremskraftverstärker nach Anspruch 1, **dadurch gekennzeichnet, dass** die Lagervorrichtung (20) einen Mittenabschnitt (20a), einen ersten Endabschnitt (20b) und einen zweiten Endabschnitt (20c) aufweist, wobei die Lagervorrichtung (20) derart gekröpft ausgebildet ist, dass der Mittenabschnitt (20a) im montierten Zustand der Lagervorrichtung (20) in einer, zu einer Verstellachse (V) der Spindel (14) senkrechten ersten Ebene (E1) angeordnet ist, und wobei der erste Endabschnitt (20b) und der zweite Endabschnitt (20c) der Lagervorrichtung (20) zumindest teilweise in einer, zu der Verstellachse (V) der Spindel (14) senkrechten, von der ersten Ebene (E1) beabstandeten zweiten Ebene (E2) angeordnet sind.

3. Elektromechanischer Bremskraftverstärker nach Anspruch 1 oder 2, **dadurch gekennzeichnet, dass** die Spindel (14) aufgrund von Hub und Toleranzen der Spindel (14) einen Kippwinkel (a) gegenüber dem ersten Tragelement (16) und/oder dem zweiten Tragelement (18) aufweist, wobei das erste Gleitlager (30) und das zweite Gleitlager (32) dazu ausgebildet sind, sich dem Kippwinkel (α) anzupassen.

4. Elektromechanischer Bremskraftverstärker nach einem der Ansprüche 1 bis 3, **dadurch gekennzeichnet, dass** eine Spindelmutter (15) der Spindel (14) an einem Außenumfang (15a) ein Vielzahnprofil aufweist und in einer Vielzahnnabe (24) eines Zahnrads (25) des Getriebes (12) entlang der Verstellachse (V) der Spindel (14) verschiebbar gelagert ist.

5. Elektromechanischer Bremskraftverstärker nach einem der Ansprüche 1 bis 4, **dadurch gekennzeichnet, dass** das erste Gleitlager (30) in die erste Öffnung (22) der Lagervorrichtung (20) mittels einer an einem Außenumfang des ersten Gleitlagers (30) umlaufend ausgebildeten Nut (30a) eingesetzt ist, wobei zwischen der Lagervorrichtung (20) und der Nut (30a) ein Spalt ausgebildet ist, und wobei das erste Gleitlager (30) in der Nut (30a) relativ zu der Lagervorrichtung (20) um eine parallel zu dem ersten Endabschnitt (20b) und dem zweiten Endabschnitt (20c) angeordneten Achse dreh- und kippbar gelagert ist.

6. Elektromechanischer Bremskraftverstärker nach Anspruch 4 oder 5, **dadurch gekennzeichnet, dass** eine Stirnseite (15b) der Spindelmutter (15) ein gemeinsamer Anschlag der Lagervorrichtung (20) und von Fingerelementen (35) ist, welche eine Eingangsstange (27), einen durch die Eingangsstange (27) betätigbaren, in der als Hohlspindel (14) ausgebildeten Spindel (14) angeordneten Plunger (33) und eine an dem Plunger (33) angeordnete Befestigungsplatte (34) miteinander verbinden.

7. Elektromechanischer Bremskraftverstärker nach Anspruch 6, **dadurch gekennzeichnet, dass** die Fingerelemente (35) durch in der Lagervorrichtung (20) ausgebildete Löcher (20d) greifen und zusammen mit der Befestigungsplatte (34) gegen ein Verdrehen gesichert sind.

8. Elektromechanischer Bremskraftverstärker nach einem der Ansprüche 1 bis 7, **dadurch gekennzeichnet, dass** das erste Gleitlager (30) und das zweite Gleitlager (32) aus Kunststoff, insbesondere Polyoxymethylen oder Polyamid ausgebildet und für eine Reibpaarung Kunststoff/Stahl geeignet sind.

9. Bremssystem, mit:
einem elektromechanischen Bremskraftverstärker (1) nach einem der Ansprüche 1 bis 8; und
einem Hauptbremszylinder (7), welcher durch den elektromechanischen Bremskraftverstärker (1) betätigbar ist.

## Claims

1. Electromechanical brake booster (1) for a motor vehicle, comprising:
an electric motor which is operatively connected to a spindle (14) via a gearing (12) in such a manner that rotation of a rotor of the electric motor brings about a translational movement of the spindle (14),
wherein a first supporting element (16) and a second supporting element (18) which extend along their respective longitudinal axis (L) are fastened to a gearing housing bottom (12a) of the gearing (12),
wherein a bearing device (20) is arranged on the spindle (14), said bearing device supporting the spindle (14) on the first supporting element (16) and on the second supporting element (18) in such a manner that the spindle (14), which is set into the translational movement, is mounted by means of the bearing device (20) at a distance from the first supporting element (16) and the second supporting element (18) so as to be displaceable along the first supporting element (16) and the second supporting element (18),
and wherein the bearing device (20) has a first opening (22) into which a first plain bearing (30) embracing the first supporting element (16) is inserted, and the bearing device (20) has a second opening (23) into which a second plain bearing (32) embracing the second supporting element (18) is inserted,
**characterized in that**
the first plain bearing (30) guides the spindle (14) along the first supporting element (16) while the second plain bearing (32) is mounted on the second supporting element (18) in a manner so as to float in the transverse direction with respect to the longitudinal axis (L) of the second supporting element (18).

2. Electromechanical brake booster according to Claim 1, **characterized in that** the bearing device (20) has a central section (20a), a first end section (20b) and a second end section (20c), wherein the bearing device (20) is designed to be bent in such a manner that, in the mounted state of the bearing device (20), the central section (20a) is arranged in a first plane (E1) perpendicular to an axis of adjustment (V) of the spindle (14), and wherein the first end section (20b) and the second end section (20c) of the bearing device (20) are at least partially arranged in a second plane (E2) which is perpendicular to the axis of adjustment (V) of the spindle (14) and is spaced apart from the first plane (E1).

3. Electromechanical brake booster according to Claim 1 or 2, **characterized in that** the spindle (14), owing to the stroke and tolerances of the spindle (14), has a tilting angle (α) in relation to the first supporting element (16) and/or the second supporting element (18), wherein the first plain bearing (30) and the second plain bearing (32) are designed to adapt to the tilting angle (α).

4. Electromechanical brake booster according to one of Claims 1 to 3, **characterized in that** a spindle nut (15) of the spindle (14) has a multi-toothed profile on an outer circumference (15a) and is mounted in a multi-toothed hub (24) of a gearwheel (25) of the gearing (12) so as to be displaceable along the axis of adjustment (V) of the spindle (14).

5. Electromechanical brake booster according to one of Claims 1 to 4, **characterized in that** the first plain bearing (30) is inserted into the first opening (22) of the bearing device (20) by means of a groove (30a) formed in an encircling manner on an outer circumference of the first plain bearing (30), wherein a gap is formed between the bearing device (20) and the groove (30a), and wherein the first plain bearing (30) is mounted in the groove (30a) so as to be rotatable and tiltable relative to the bearing device (20) about an axis arranged parallel to the first end section (20b) and the second end section (20c).

6. Electromechanical brake booster according to Claim 4 or 5, **characterized in that** an end side (15b) of the spindle nut (15) is a common stop of the bearing device (20) and of finger elements (35) which connect together an input rod (27), a plunger (33), which is actuable by the input rod (27) and is arranged in the spindle (14) designed as a hollow spindle (14), and a fastening plate (34), which is arranged on the plunger (33).

7. Electromechanical brake booster according to Claim 6, **characterized in that** the finger elements (35) reach through holes (20d) formed in the bearing device (20) and are secured together with the fastening plate (34) against twisting.

8. Electromechanical brake booster according to one of Claims 1 to 7, **characterized in that** the first plain bearing (30) and the second plain bearing (32) are formed from plastic, in particular polyoxymethylene or polyamide, and are suitable for a plastic/steel friction pairing.

9. Brake system, comprising:
an electromechanical brake booster (1) according to one of Claims 1 to 8; and
a main brake cylinder (7) which is actuable by the electromechanical brake booster (1).

## Revendications

1. Servofrein électromécanique (1) pour un véhicule automobile, comprenant : un moteur électrique qui est en liaison fonctionnelle par le biais d'une transmission (12) avec une broche (14), de telle sorte qu'une rotation d'un rotor du moteur électrique provoque un déplacement en translation de la broche (14), un premier élément de support (16) et un deuxième élément de support (18) étant fixés à un fond de boîte de transmission (12a) de la transmission (12), lesquels s'étendent le long de leur axe longitudinal respectif (L),
un dispositif de palier (20) étant disposé au niveau de la broche (14), lequel supporte la broche (14) au niveau du premier élément de support (16) et au niveau du deuxième élément de support (18) de telle sorte que la broche (14) animée du mouvement de translation soit supportée de manière déplaçable au moyen du dispositif de palier (20) à distance du premier élément de support (16) et du deuxième élément de support (18) le long du premier élément de support (16) et du deuxième élément de support (18),
et le dispositif de palier (20) présentant une première ouverture (22) dans laquelle est inséré un premier palier lisse (30) venant en prise autour du premier élément de support (16), et le dispositif de palier (20) présentant une deuxième ouverture (23) dans laquelle est inséré un deuxième palier lisse (32) venant en prise autour du deuxième élément de support (18),
**caractérisé en ce que**
le premier palier lisse (30) guide la broche (14) le long du premier élément de support (16) tandis que le deuxième palier lisse (32) est supporté de manière flottante sur le deuxième élément de support (18) dans la direction transversale par rapport à l'axe longitudinal (L) du deuxième élément de support (18).

2. Servofrein électromécanique selon la revendication 1, **caractérisé en ce que** le dispositif de palier (20) présente une portion centrale (20a), une première portion d'extrémité (20b) et une deuxième portion d'extrémité (20c), le dispositif de palier (20) étant réalisé de manière coudée de telle sorte que la portion centrale (20a), dans l'état monté du dispositif de palier (20), soit disposée dans un premier plan (E1) perpendiculaire à un axe de réglage (V) de la broche (14), et la première portion d'extrémité (20b) et la deuxième portion d'extrémité (20c) du dispositif de palier (20) étant disposées au moins en partie dans un deuxième' plan (E2) espacé du premier plan (E1), perpendiculaire à l'axe de réglage (V) de la broche (14).

3. Servofrein électromécanique selon la revendication 1 ou 2, **caractérisé en ce que** la broche (14), du fait de la course et des tolérances de la broche (14), présente un angle de basculement (a) par rapport au premier élément de support (16) et/ou au deuxième élément de support (18), le premier palier lisse (30) et le deuxième palier lisse (32) étant réalisés de manière à s'adapter à l'angle de basculement (a).

4. Servofrein électromécanique selon l'une quelconque des revendications 1 à 3, **caractérisé en ce qu'**un écrou de broche (15) de la broche (14) présente au niveau d'une périphérie extérieure (15a) un profil à plusieurs dents et est supporté de manière déplaçable dans un moyeu à plusieurs dents (24) d'une roue dentée (25) de la transmission (12) le long de l'axe de réglage (V) de la broche (14).

5. Servofrein électromécanique selon l'une quelconque des revendications 1 à 4, **caractérisé en ce que** le premier palier lisse (30) est inséré dans la première ouverture (22) du dispositif de palier (20) au moyen d'une rainure (30a) réalisée sur la périphérie au niveau d'une périphérie extérieure du premier palier lisse (30), une fente étant réalisée entre le dispositif de palier (20) et la rainure (30a), et le premier palier lisse (30) étant supporté dans la rainure (30a) de manière à pouvoir tourner et basculer par rapport au dispositif de palier (20) autour d'un axe disposé parallèlement à la première portion d'extrémité (20b) et à la deuxième portion d'extrémité (20c).

6. Servofrein électromécanique selon la revendication 4 ou 5, **caractérisé en ce qu'**un côté frontal (15b) de l'écrou de broche (15) est une butée commune du dispositif de palier (20) et d'éléments de doigts (35) qui relient ensemble une tige d'entrée (27), un plongeur (33) pouvant être actionné par la tige d'entrée (27), disposé dans la broche (14) réalisée sous forme de broche creuse (14), et une plaque de fixation (34) disposée au niveau du plongeur (33).

7. Servofrein électromécanique selon la revendication 6, **caractérisé en ce que** les éléments de doigts (35) s'engagent à travers des trous (20d) réalisés dans le dispositif de palier (20) et sont fixes en rotation conjointement avec la plaque de fixation (34) .

8. Servofrein électromécanique selon l'une quelconque des revendications 1 à 7, **caractérisé en ce que** le premier palier lisse (30) et le deuxième palier lisse (32) sont réalisés en plastique, en particulier en polyoxyméthylène ou en polyamide et sont appropriés pour un appariement de friction plastique/acier.

9. Système de freinage comprenant :
un servofrein électromécanique (1) selon l'une quelconque des revendications 1 à 8 ; et
un maître-cylindre de frein (7) qui peut être actionné par le servofrein électromécanique (1).
